# FASCICULE DE BREVET EUROPEEN

(11) **EP 2 904 889 B1**
(45) Date de publication et mention de la délivrance du brevet: **08.07.2020**
(21) Numéro de dépôt: 15154269.3
(22) Date de dépôt: 09.02.2015
(51) Int. Cl.: A01C 7/20, A01C 5/06, B60B 5/02, B60B 25/00

(54) **ROUE FORMANT OUTIL AGRICOLE AMÉLIORÉ**
RAD, DAS EIN VERBESSERTES LANDWIRTSCHAFTLICHES GERÄT BILDET
WHEEL FORMING AN IMPROVED AGRICULTURAL TOOL

(30) Priorité: 10.02.2014 FR 1451000
(43) Date de publication de la demande: 12.08.2015
(73) Titulaire: OTICO, 77650 Chalmaison (FR)
(72) Inventeur: Phely, Olivier, 77520 Thenisy (FR)
(74) Mandataire: Cabinet Netter

(56) Documents cités:
- US-A- 921 557
- US-A- 1 087 816
- US-A- 2 731 900
- US-A- 5 533 793

## Description

L'invention concerne les outils agricoles, et plus particulièrement ceux comprenant principalement une ou plusieurs roues.

Dans les outils de ce type, la ou les roues sont généralement utilisées pour travailler le sol. Les roues peuvent opérer seules, ou en coopération avec d'autres parties de l'outil.

Dans le cas d'un semoir par exemple, l'outil comprend une partie agencée pour ouvrir un sillon dans le sol, typiquement un soc, un disque ou une dent, et une ou plusieurs roues pour fermer le sillon et/ou pour tasser la terre, après que les semences ont été déposées au fond du sillon.

Certains outils, comme le semoir précité, comprennent également des roues dites "de jauge", lesquelles règlent la profondeur de travail du reste de l'outil. Dans le cas d'un outil comportant un soc par exemple, on monte des roues de jauge solidairement au soc, de sorte qu'en roulant sur le sol, les roues maintiennent la partie active du soc à une profondeur sensiblement constante.

Le plus souvent, les roues qui équipent les outils agricoles sont destinées à rouler sur le sol. Elles comprennent alors un pneumatique monté autour d'une partie de la roue qui forme le corps de celle-ci.

Pour éviter que le pneumatique ne se désolidarise du corps de roue lors du travail, la partie du corps de roue qui forme la jante est conformée de manière particulière. Il en résulte des formes généralement complexes, qui compliquent la fabrication du corps de roue, et également le montage du pneumatique sur celui-ci.

C'est pourquoi, les roues comprennent souvent deux flasques similaires qui se montent l'un sur l'autre pour former le corps de la roue. Les flasques sont assemblés l'un à l'autre par l'intermédiaire de l'une de leurs faces principales, tout en enserrant le pneumatique.

Dans FR 2 933 903, la demanderesse a proposé une roue innovante, dont la forme du corps de roue évite au pneumatique de déjanter en service, y compris dans des conditions extrêmes. Le corps en question est formé par l'assemblage mutuel de deux flasques similaires, face contre face.

Le document US 2 731 900 A décrit une roue de semoir faite d'un corps comprenant un disque plein avec moyeu, deux jantes identiques montées sur le disque 21, de chaque côté de celui-ci, par l'intermédiaire d'organes supports en forme de bras.

Lorsqu'elles sont utilisées en tant qu'outils, les roues sont généralement soumises à des efforts importants en fonctionnement.

Dans certains cas, en particulier lorsqu'elle équipe un semoir, l'orientation de la roue dans la machine ne correspond pas à la direction d'avance de cette dernière : il arrive fréquemment que la roue soit inclinée de manière importante par rapport à la direction d'avance. En outre, la roue peut être inclinée par rapport à la verticale au sol. Il en résulte, en fonctionnement, des contraintes très importantes sur le corps de roue.

Pour s'assurer que la roue résiste à ces contraintes, il est classique de prévoir un corps de roue assez massif. Il en résulte une masse de roue importante, ce qui n'est pas souhaitable. Une masse importante augmente les coûts de fabrication et d'acheminement, et complique le montage de la roue sur la machine, en particulier les montages en porte-à-faux.

La demanderesse s'est fixé comme objectif d'améliorer la situation.

Elle propose un outil de travail comprenant un premier flasque et un second flasque qui se montent l'un sur l'autre en formant un corps de roue. Le premier flasque comporte une partie centrale, une partie périphérique de forme générale annulaire, et au moins un bras reliant la partie centrale et la partie périphérique l'une à l'autre. Le second flasque est homologue à la partie périphérique du premier flasque. À l'état monté, le corps de roue présente une jante formée conjointement par la partie périphérique du premier flasque et le second flasque et un moyeu formé par la partie centrale du premier flasque.

Dans l'outil proposé, le montage et le démontage du pneumatique sont facilités du fait de la configuration particulière du corps de roue. Celui présente une résistance mécanique au moins égale aux roues classiques, du moins suffisante pour le travail en champ. La fabrication du corps de roue nécessite beaucoup moins de matière première. L'outil proposé présente des temps et des coûts de fabrication réduits.

L'outil peut présenter les caractéristiques optionnelles suivantes, seules ou en combinaison les unes des autres.
- Le premier flasque et le second flasque sont faits de deux matériaux différents. Ainsi, les propriétés mécaniques de chacun des matériaux sont mieux adaptées aux fonctions particulières de chacun des deux flasques.
- Le second flasque est en métal. Le second flasque présentant généralement un volume de matière inférieur à celui du premier flasque, l'augmentation de la masse par rapport à un second flasque en plastique reste faible.
- Le premier flasque est en matériau plastique et le second flasque est en matériau plastique. La masse du corps de roue est alors faible par rapport à un corps de roue comprenant au moins un flasque en métal.
- Le second flasque est formé d'au moins deux pièces en formes générales de sections d'anneau. La taille des installations pour la fabrication du second flasque, par exemple les moules, peuvent être de dimension réduite. Le second flasque occupe un espace faible avant son assemblage. Ceci facilite le transport.
- Chacun du premier flasque et du second flasque supporte un pneumatique enfilé sur la jante. La force supportée par le corps de roue due au serrage du pneumatique est alors mieux répartie. Les concentrations de contraintes et les risques de rupture sont réduits.
- À l'état montés l'un sur l'autre des deux flasques, le moyeu du premier flasque dépasse au moins en partie dans un espace intérieur défini par la forme annulaire du second flasque. L'équilibrage du corps de roue dans son ensemble monté sur un essieu est alors amélioré. En particulier, cet équilibrage peut être réglé en fonction des contraintes en fonctionnement.
- La partie périphérique du premier flasque et le second flasque présentent chacun une surface externe dont le diamètre au voisinage de l'interface entre le premier flasque et le second flasque à l'état monté est différent du diamètre du côté opposé à l'interface entre le premier flasque et le second flasque, de sorte que la jante présente un siège de forme générale concave ou convexe propre à recevoir un pneumatique. Le pneumatique est maintenu axialement par le siège lui-même. Le risque de déjantage accidentel est alors réduit.
- La partie périphérique du premier flasque et le second flasque sont mutuellement conformés de sorte que leur assemblage définisse une rainure s'étendant sensiblement sur la circonférence du corps de roue à l'interface de la partie périphérique du premier flasque et du second flasque. La rainure est propre à loger un talon d'un pneumatique. Le pneumatique est alors maintenu selon une direction radiale dans la rainure. Le risque de déjantage accidentel est alors réduit.
- Le premier flasque est monobloc et le second flasque est monobloc. La fabrication de l'un et/ou de l'autre peut être réalisée par une unique opération de moulage. Le risque de rupture de l'un des deux flasques en fonctionnement est réduit.

D'autres caractéristiques, détails et avantages de l'invention apparaîtront à la lecture de la description détaillée ci-après, et des dessins annexés, sur lesquels :
- la figure 1 montre une vue en perspective d'un outil selon l'invention,
- la figure 2 montre une vue de l'outil de la figure 1 depuis un autre point de vue,
- la figure 3 montre une vue depuis une face de l'outil de la figure 1,
- la figure 4 montre une vue en coupe de l'outil de la figure 1,
- la figure 5 montre une vue similaire à la figure 2 sur laquelle le corps de roue est représenté dépourvu de pneumatique,
- la figure 6 montre une vue éclatée et en perspective du corps de roue de la figure 5,
- la figure 7 montre une vue éclatée et en perspective d'un outil selon l'invention,
- la figure 8 montre une vue en coupe de l'outil de la figure 7 sur laquelle l'outil est représenté dépourvu de pneumatique,
- la figure 9 montre une vue éclatée et en perspective d'un outil selon l'invention,
- la figure 10 montre une vue en coupe de l'outil de la figure 9 sur laquelle l'outil est représenté dépourvu de pneumatique,
- la figure 11 montre une vue éclatée et en perspective d'un outil selon l'invention sur laquelle l'outil est représenté dépourvu de pneumatique,
- la figure 12 montre une vue en coupe de l'outil de la figure 11,
- la figure 13 montre une vue similaire à la figure 2 de l'outil de la figure 11, et
- les figures 14A à 14D montrent une machine agricole sur laquelle sont montés deux outils selon l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

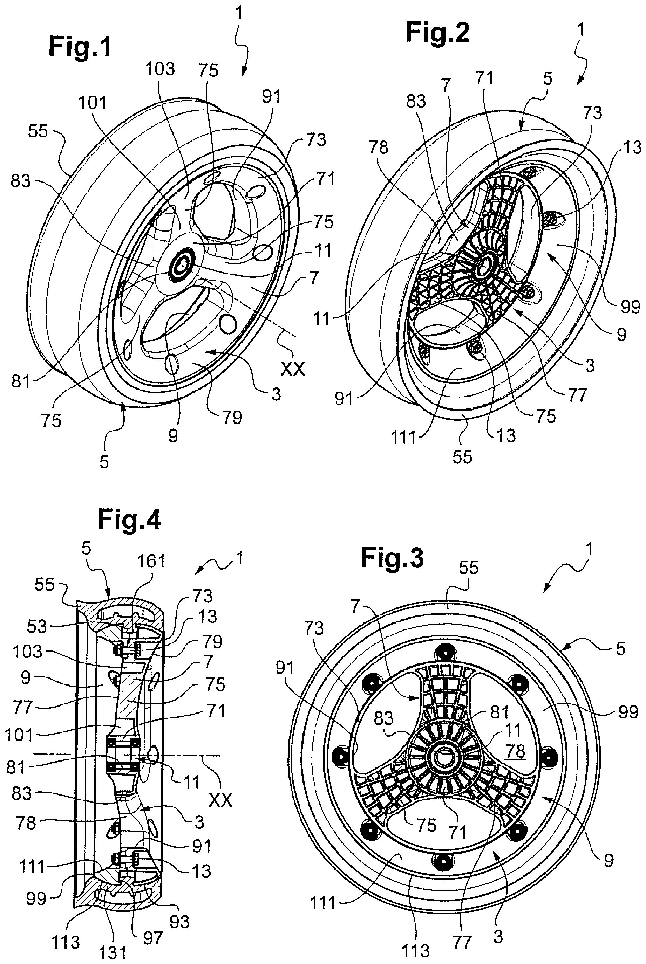

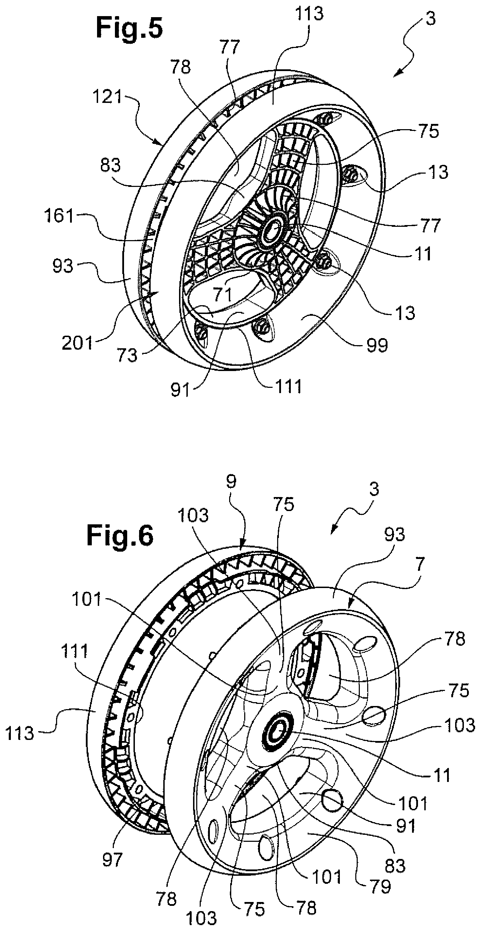

Les figures 1 à 4 montrent un outil de travail en champ sous la forme d'une roue 1. La roue 1 comprend un corps de roue 3 autour duquel est monté un pneumatique 5. Les figures 5 et 6 montrent le corps de roue 3 du mode de réalisation des figures 1 à 4 avant que le pneumatique 5 n'y soit monté.

Dans la suite de la description, on désigne par corps de roue ("*body*" ou "*wheel body*" en anglais) la partie pratiquement indéformable de la roue, par opposition à la partie déformable que constitue le pneumatique. On désigne par jante ("*rim*" ou "*wheel rim*" en anglais) la partie située à la périphérie du corps de roue et destinée à supporter le pneumatique. Le reste du corps de roue peut être appelé voile de roue ("*disc*", "*wheel disc*", "*dish*", ou encore "*wheel dish*" en anglais). Autrement dit, le corps de roue est constitué de la jante et du voile de roue. Ici, le terme jante ne saurait désigner l'intégralité du corps de roue, contrairement à l'usage, abusif, que l'on peut en faire communément.

Le corps de roue 3 est formé d'un premier flasque 7 et d'un second flasque 9 généralement circulaires. Le premier flasque 7 et le second flasque 9, représentés de manière séparée sur la figure 6, se montent l'un sur l'autre pour former le corps de roue 3 comme cela est représenté sur la figure 5.

Le premier flasque 7 et le second flasque 9 présentent chacun un axe central, ou axe de révolution. Ces axes centraux sont confondus à l'état assemblé et coïncident avec l'axe de rotation de la roue 1 en fonctionnement. Ces axes sont référencés XX sur les figures.

Le premier flasque 7 et le second flasque 9 présentent chacun une face interne, respectivement 77 et 97, et une face externe opposée, respectivement 79 et 99. Lors de l'assemblage du premier flasque 7 et du second flasque 9 l'un sur l'autre, les faces internes 77 et 97 sont mises en regard l'une de l'autre. Les faces externes 79 et 99 sont orientées à l'opposée l'une de l'autre, vers l'extérieur du corps de roue 3.

Le premier flasque 7 et le second flasque 9 sont fixés, ici de manière réversible, l'un à l'autre pour former le corps de roue 3 au moyen de fixations. Dans l'exemple décrit ici, les fixations comprennent des couples vis-écrou 13. Les couples vis-écrou 13 permettent de maintenir ensemble le premier flasque 7 et le second flasque 9. Ici, les couples vis-écrou 13 sont répartis suivant la périphérie du corps de roue. En remplacement ou en supplément, d'autres moyens de fixation peuvent être utilisés, par exemples, des clips ou des rivets.

Le premier flasque 7 comporte une partie centrale 71, une partie périphérique 73 et au moins un bras 75 reliant la partie centrale 71 à la partie périphérique 73. Ici, le premier flasque 7 comporte trois bras 75.

La partie centrale 71 présente une forme générale de révolution. À l'état assemblé, la partie centrale 71 forme le moyeu de la roue 1. L'espace central de la forme de révolution de la partie centrale 71 est propre à recevoir un essieu ou une fusée destinés à supporter la roue 1 libre en rotation selon l'axe de rotation XX. La roue 1 comprend un palier rotatif logés dans la partie centrale 71, ici sous la forme d'un roulement à billes 11. En variante, le roulement à billes 11 peut être remplacé par d'autres types de roulements, et plus généralement par un palier de type différent, tel qu'un palier lisse par exemple.

La partie centrale 71 présente une surface interne 81, généralement orientée vers l'axe principal XX et formant, ici, un alésage propre à loger le roulement 11. La partie centrale 71 présente une surface externe 83, périphérique, opposée à la surface interne 81.

La partie périphérique 73 est de forme générale annulaire. La partie périphérique 73 est délimitée, selon la direction de l'axe principale XX, par un bord interne et un bord externe. La partie périphérique 73 et la partie centrale 71 sont sensiblement concentriques et centrées sur l'axe principal XX. La partie périphérique 73 entoure la partie centrale 71. Dans l'exemple représenté sur la figure 4, la partie périphérique 73 et la partie centrale 71 sont décalées l'une par rapport à l'autre selon la direction de l'axe principal XX. Du côté de la face interne 77 (à gauche sur la figure 4), la partie centrale 71 fait saillie par rapport au bord interne de la partie périphérique 73 selon la direction de l'axe principal XX, quasiment sur toute la longueur de la partie centrale 71. Du côté de la face externe 79 (à droite sur la figure 4), la partie centrale 71 est disposée en retrait par rapport au bord externe de la partie périphérique 73. L'extrémité externe de la partie centrale 71 est presque alignée avec le bord interne de la partie périphérique 73. En variante, la partie périphérique 73 et la partie centrale 71 peuvent être sensiblement coplanaires selon un plan perpendiculaire à l'axe principal XX.

La partie périphérique 73 présente une surface interne 91, ou diamétralement intérieure, généralement orientée vers la partie centrale 71 et une surface externe 93, ou diamétralement extérieure et périphérique, opposée à la surface interne 91. Ici, la surface interne 91 présente une forme générale cylindrique interrompue par les bras 75. Ici, la surface externe 93 présente une forme générale annulaire, de profil arrondi et bombé vers l'extérieur.

Chaque bras 75 présente une extrémité interne 101 liée à la partie centrale 71 en sa surface externe 83, et une extrémité externe 103, opposée à l'extrémité interne 101 et reliée à la partie périphérique 73 en sa surface interne 91. Chaque bras 75 relie alors la partie centrale 71 et la partie périphérique 73 l'une à l'autre. Les bras 75 s'étendent radialement. Ils forment des rayons de la roue 1.

Ici, l'extrémité interne 101 de chacun des bras 75 est reliée à la surface externe 83 sensiblement sur toute la longueur de la partie centrale 71 dans la direction de l'axe principal XX. Les bras 75 présentent une épaisseur, selon la direction de l'axe principal XX, qui décroît légèrement puis croît de manière régulière depuis la partie centrale 71 jusqu'à l'extrémité externe 103, où elle est maximum et sensiblement égale à l'épaisseur de la partie périphérique 73. Ainsi, l'extrémité externe 103 de chaque bras 75 se confond sensiblement avec la partie périphérique 73 à laquelle elle est reliée. La partie centrale 71 fait saillie par rapport au plan défini par le bord interne de la partie périphérique 73. La partie de la face interne 77 du premier flasque 7 définie par les bras 75 présente une forme générale tronconique reliant les extrémités internes de la partie centrale 71 et de la partie périphérique 73. La partie de la face externe 79 du premier flasque 7 définie par les bras 75 est sensiblement concave, en forme de cuvette centrée sur l'axe principale XX. L'extrémité externe de la partie centrale 71 fait légèrement saillie dans le fond de la forme de cuvette.

Des espaces 78 sont définis entre les bras 75 et la surface interne 91 de la partie périphérique 73. La répartition des bras 75 autour de la partie centrale 71 définit autant d'espaces intercalaires 78. Ces espaces 78 sont libres et traversants selon la direction de l'axe principal XX, de la face interne 77 à la face externe 79. En fonctionnement, les espaces 78 facilitent l'évacuation de débris et de boue au travers du premier flasque 7. Les bras 75 et les espaces 78 intercalaires forment conjointement un voile de roue ouvert.

Les bras 75 sont régulièrement répartis de façon angulaire autour de l'axe principal XX. Dans les exemples décrits ici, ils sont au nombre de trois et écartés de 120° les uns des autres. Cette configuration permet d'assurer une résistance mécanique suffisante pour les applications envisagées tout en permettant une économie de matière par rapport à un voile de roue plein. Dans des variantes, le nombre et/ou la répartition des bras 75 peuvent être différents.

Dans les exemples décrits ici, le premier flasque 7 est conformé en une pièce monobloc. Le premier flasque 7 est obtenu, par exemple, par moulage par injection. Le premier flasque 7 est, ici, en matériau plastique, par exemple du polyamide tel que du polyamide 6-6, ou du polypropylène. Le premier flasque 7 en plastique présente des coûts faibles en matière première et en fabrication. Néanmoins, le premier flasque 7 peut également être réalisé en métal. Le premier flasque 7 en métal présente alors une résistance améliorée aux chocs, par exemple en cas de projections de pierres lors du roulage de la machine.

Comme cela apparaît sur les figures 2 à 6, le premier flasque 7 peut prendre la forme d'une enveloppe consolidée par des parois internes de renfort, ou nervures, entre lesquelles de multiples cavités sont laissées vides. Les nervures confèrent au premier flasque 7 une bonne résistance mécanique, comparable à une pièce métallique et/ou une pièce plastique pleine. Elles permettent d'assurer la résistance mécanique nécessaire avec peu de matière première. Le volume occupé par le premier flasque 7 est en grande partie creux.

Le cas échéant, le nombre, la répartition et la forme des nervures peuvent être adaptés en fonction de la résistance mécanique souhaitée pour le premier flasque 7. Des outils de modélisation de type à éléments finis peuvent être utilisés.

La partie centrale 71 loge le roulement 11. Au montage, le roulement 11 est monté coaxialement à l'axe principal XX du corps de roue 3. Le roulement 11 est maintenu dans cette position grâce au logement de sorte que l'axe principal XX du corps de roue 3 coïncide avec l'axe de rotation de la roue 1 en utilisation.

Dans l'exemple décrit ici, la surface intérieure 81 de la partie centrale 71 du premier flasque 7 prend la forme d'un alésage traversant selon l'axe principal XX. L'alésage est, ici, constitué d'une succession, selon la direction de l'axe principal XX, de trois portions sensiblement cylindriques et concentriques. La portion centrale présente un petit diamètre tandis que la portion interne et la portion externe présentent chacune un grand diamètre. Les deux grands diamètres sont, ici, égaux. La portion centrale est reliée à chacune de la portion interne et de la portion externe par un épaulement annulaire respectif, orienté respectivement vers le côté interne et le côté externe du premier flasque 7.

Le roulement 11 présente une forme qui correspond à la surface intérieure 81. Le roulement 11 est formé d'un assemblage d'au moins deux pièces. Lors de l'installation du roulement 11 dans la surface intérieure 81, chacune des deux pièces est insérée respectivement depuis le côté interne et depuis le côté externe de la surface intérieure 81 pour venir en appui respectivement sur chacun des épaulements annulaires. Une fois les deux pièces assemblées l'une à l'autre, les deux épaulements forment butées axiales et s'opposent à la sortie du roulement 11 du logement.

Le second flasque 9 est homologue de la partie périphérique 73 du premier flasque 7. Le second flasque 9 présente une forme générale annulaire. Le second flasque 9 est dépourvu de bras et de partie centrale formant moyeu. Le second flasque 9 présente une surface interne 111 homologue de la surface interne 91 du premier flasque 7, généralement orientée vers l'axe de rotation XX et une surface externe 113 homologue de la surface externe 93 du premier flasque 7, opposée à la surface interne 111. La surface interne 111 du second flasque 9 et la surface interne 91 du premier flasque 7 fonctionnent de manière analogue.

Dans l'exemple représenté sur les figures, le second flasque 9 prend la forme d'un anneau de section pleine et généralement triangulaire. L'un des côtés de la forme en triangle porte la surface externe 113 homologue de la surface externe 93 de la partie périphérique 73 du premier flasque 7. La surface externe 113 présente une forme générale annulaire, de profil arrondi et bombé vers l'extérieur.

Lors de l'assemblage des deux flasques 7, 9 l'un sur l'autre, les espaces 78 du premier flasque 7 viennent en regard de l'espace intérieur libre de la forme annulaire du second flasque 9. Les espaces 78 restent donc traversants. Le corps de roue 3 présente un voile de roue ouvert.

Dans les exemples décrits ici, le second flasque 9 est formé d'une pièce monobloc. Le second flasque 9 est obtenu par moulage. Le second flasque 9 prend une forme de collerette ou de rebord périphérique. En variante, le second flasque 9 peut être obtenu par estampage ou par emboutissage à partir d'une tôle. Le second flasque 9 est ici en métal, par exemple de l'acier. En variante, de l'aluminium peut être utilisé. Le second flasque 9 présente une résistance mécanique élevée. Néanmoins, le second flasque 9 peut également être réalisé en un matériau plastique, par exemple similaire à celui du premier flasque 7.

Le premier flasque 7 en plastique présente un faible coût de fabrication tandis que le second flasque 9 en métal confère au corps de roue 3 la résistance mécanique nécessaire au travail en champs. Néanmoins, les deux flasques 7, 9 peuvent être réalisés tout deux en métal, par exemple lorsque les contraintes mécaniques prévues sont sévères, ou tout deux en plastique, par exemple lorsque les contraintes mécaniques prévues sont modestes. La configuration générale du corps de roue 3 formé par le premier flasque 7 et le second flasque 9 permet d'adapter le comportement mécanique du corps de roue 3 en adaptant les matériaux utilisés sans altérer la configuration générale du corps de roue 3. En variante, le premier flasque 7 et/ou le second flasque 9 peuvent être réalisés par assemblage de plusieurs pièces plutôt que par une pièce monobloc. Par exemple, la partie périphérique 73 du premier flasque 7 et/ou le second flasque 9 peuvent être formés de plusieurs sections d'anneau.

Une fois les deux flasques 7, 9 mutuellement assemblés, le corps de roue 3 présente une jante 121 formée conjointement par la partie périphérique 73 du premier flasque 7 et le second flasque 9 homologue de la partie périphérique 73. La jante 121 présente alors une surface externe formée conjointement par la surface externe 93 de la partie périphérique 73 du premier flasque 7 et par la surface externe 113 homologue du second flasque 9. Cette surface externe de jante forme un siège 201 de corps de roue 3. Le siège 201 accueille le pneumatique 5.

Une fois le pneumatique 5 enfilé sur la jante 121, le premier flasque 7 et le second flasque 9 supportent le pneumatique 5, ici chacun sensiblement pour moitié. L'aire de la surface externe 93 du premier flasque 7 couverte par le pneumatique 5 est sensiblement équivalente à l'aire de la surface externe homologue du second flasque 9 couverte par le pneumatique 5. Le premier flasque 7, le second flasque 9 et le pneumatique 5 sont mutuellement configurés de sorte que la force radiale appliquée par le pneumatique 5 encerclant le corps de roue 3 se répartie sensiblement de manière équivalente sur les deux flasques 7, 9. Aucun du premier flasque 7 et du second flasque 9 n'a pour fonction unique le blocage du pneumatique 5 selon la direction de l'axe principal XX. En variante, la répartition des forces peut être déséquilibrée, par exemple jusqu'à un rapport de 4 pour 1.

Le pneumatique 5 comprend une semelle 131 en appui sur le siège 201 de la jante 121. Les configurations de la semelle 131 d'une part, et du siège 201 d'autre part, sont choisies concordantes, sensiblement en correspondance de forme. Le pneumatique 5 est maintenu autour du corps de roue 3. Le risque de déjantage accidentel est faible, même en conditions difficiles.

Dans les exemples décrits ici, le pneumatique 5 est un pneumatique du type semi-creux. Le pneumatique 5 est du type non gonflable. L'espace intérieur entre la semelle 131 et la bande de roulement est en communication fluidique avec l'extérieur, par une ouverture non représentée. Ceci permet une plus grande déformation du pneumatique 5 en fonctionnement, facilitant ainsi le décollage de la boue.

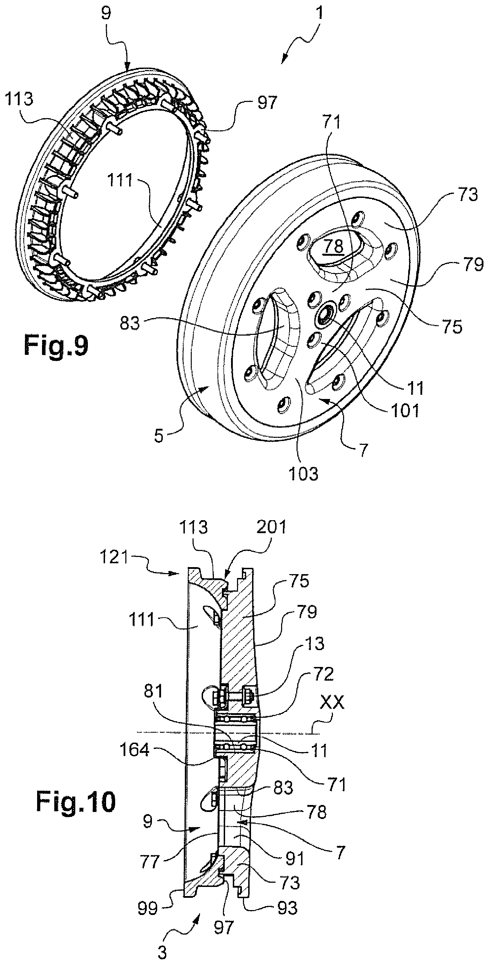

Dans les modes de réalisations représentés sur les figures, le siège 201 présente un diamètre qui varie le long de la direction de l'axe principal XX. Le siège 201 présente une forme non strictement cylindrique. Au voisinage de l'interface entre le premier flasque 7 et le second flasque 9, c'est-à-dire au voisinage des faces internes 77, 97, le diamètre du siège 201 est sensiblement différent du diamètre du siège 201 au voisinage des faces opposées, c'est-à-dire les faces externes 79, 99. Ceci est visible sur les figures 4, 8, 10 et 12 en coupe. Des portions du siège 201 s'opposent ainsi au déplacement axial du pneumatique 5. Le risque de déjantage accidentel est particulièrement faible. L'ajout d'une pièce spécifique formant joue de blocage est superflu.

Sur les modes de réalisation des figures 1 à 6 et, 11 et 12, au voisinage de l'interface entre le premier flasque 7 et le second flasque 9, le diamètre du siège 201 est supérieur au diamètre du siège 201 au voisinage des faces opposées des flasques 7, 9, à l'exception d'une rainure 161. Le siège 201 présente alors une forme générale convexe. Cette configuration permet, par exemple, l'utilisation de pneumatiques dont la semelle 131 est concave et coiffe un siège 201 convexe en l'entourant partiellement. De tels pneumatiques sont par exemple décrits dans FR 2 933 903.

En variante, au voisinage de l'interface entre le premier flasque 7 et le second flasque 9, le diamètre du siège 201 est inférieur au diamètre du siège 201 au voisinage des faces opposées. Le siège 201 présente alors une forme générale concave. Le siège 201 présente des surfaces s'opposant au déplacement axial du pneumatique 5.

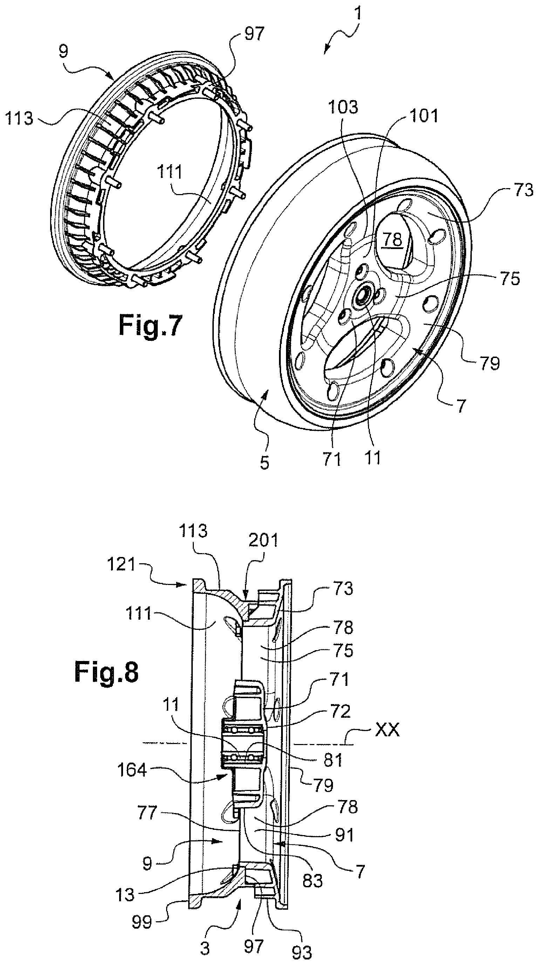

Dans les exemples de réalisation des figures 7 à 10, la partie périphérique 73 du premier flasque 7 et le second flasque 9 sont mutuellement conformés de sorte que leur assemblage définisse la rainure 161. La rainure 161 s'étend sensiblement sur la circonférence du corps de roue 3, à l'interface de la partie périphérique 73 du premier flasque 7 et du second flasque 9. La rainure 161 est propre à loger un talon 53 correspondant du pneumatique 5. Le maintien du pneumatique 5 autour du corps de roue 3 est encore amélioré.

Dans chacun des modes de réalisation représentés sur les figures, le corps de roue 3 est asymétrique. En particulier, le moyeu formé par la partie centrale 71 du premier flasque 7 est décalé par rapport au milieu du corps de roue 3 selon l'axe principal XX. Le moyeu du premier flasque 7 dépasse au moins en partie dans l'espace intérieur défini par la forme annulaire du second flasque 9, et ce plus ou moins selon les modes de réalisation. Cette caractéristique est optionnelle mais permet un meilleur équilibrage de l'outil 1 une fois installé sur le reste de la machine.

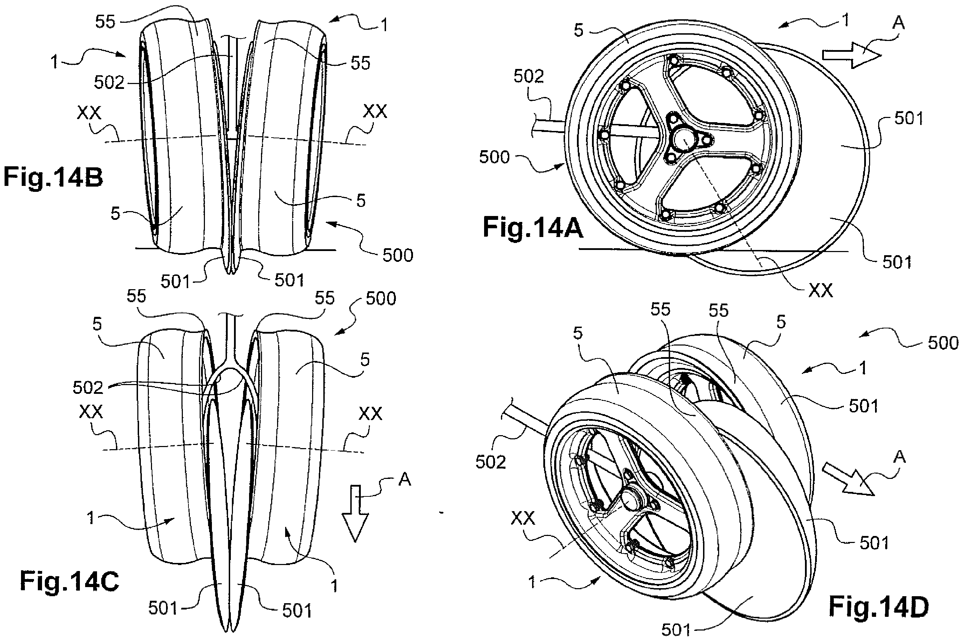

Le pneumatique 5 tel que représenté en figures 1 à 4 présente un profil asymétrique. La semelle 131 et le siège 201 présentent chacun un plan de symétrie perpendiculaire à l'axe principal XX. La partie du pneumatique 5 opposée à la semelle 131, la bande de roulement, est asymétrique. La bande de roulement présente une lèvre 55. La lèvre 55 fait saillie depuis le pneumatique 5, sensiblement selon la direction de l'axe principal XX, vers l'extérieur, du côté de la face externe 99 du second flasque 9. La lèvre 55 s'étend sensiblement le long de la circonférence du pneumatique 5. Une telle roue 1 pourvue d'un pneumatique 5 à lèvre 55 est prévue pour être installée sur une machine telle que représentée schématiquement sur les figures 14A à 14D.

Les modes de réalisation des figures 7 à 13 sont similaires à celui des figures 1 à 6. Les parties fonctionnellement identiques y portent les mêmes références numériques. Dans ces modes de réalisation, le roulement 11 comprend une double rangée de billes à contacts obliques et est logé dans une cartouche. La cartouche est de forme générale extérieure cylindrique. Le diamètre du roulement 11 est constant au contraire du mode de réalisation décrit ci-avant. La surface intérieure 81 de la partie centrale 71 du premier flasque 7 prend la forme d'un alésage traversant selon l'axe principal XX de diamètre constant sur sa longueur.

À droite sur les figures 8, 10 et 12 en coupe, la partie centrale 71 comprend, en outre, une butée axiale 72 configurée de manière à limiter le mouvement de translation du roulement 11. La butée axiale 72 est, ici, formée du côté de la face externe 79 du premier flasque 7. Par conséquent, l'insertion et l'extraction du roulement 11 peuvent être faites du côté opposé. La butée axiale 72 permet de régler le positionnement du roulement 11 par rapport au premier flasque 7. La butée axiale 72 peut être vue comme un fond du logement.

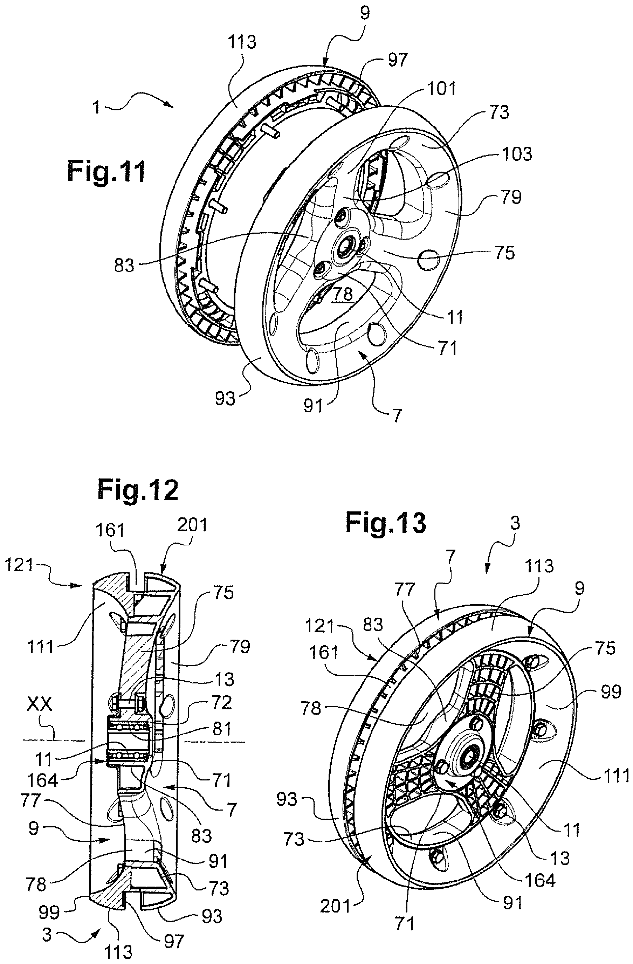

À gauche sur les figures 8, 10 et 12 en coupe et sur la figure 13, la roue 1 comprend, en outre, une pièce rapportée 164, ou coupelle. La pièce rapportée 164 est conformée de manière à être fixée au corps de roue 3 en enfermant le roulement 11 logé dans la partie centrale 71 du premier flasque 7. La pièce rapportée 164 présente, ici, une forme générale de disque dans lequel une ouverture centrale circulaire est ménagée. La pièce rapportée 164 est, ici, fabriquée par estampage d'une pièce de tôle. À l'état installée, la pièce rapportée 164 couvre en partie la partie centrale 71.

La pièce rapportée 164 se fixe du côté ouvert du logement pour le roulement 11, c'est-à-dire, ici, du côté de la face interne 77. La pièce rapportée 164 est fixée avec les couples vis-écrou 13 disposés au voisinage du centre de la roue 1. Une fois fixée contre la partie centrale 71, la pièce rapportée 164 forme un couvercle du logement et butée axiale pour le roulement 11. Le roulement 11 est enfermé à l'intérieur du logement. L'ouverture au centre de la pièce rapportée 164 permet le passage d'un essieu pour le montage de la roue 1 sur une machine agricole. Le démontage de la pièce rapportée 164 suffit à ouvrir le logement et à libérer le roulement 11. En fonctionnement, la pièce rapportée 164 assure le maintient axial du roulement 11.

La pièce rapportée 164, en couvrant au moins partiellement le moyeu, le protège de l'environnement. Par exemple, la pièce rapportée 164 protège le moyeu et le roulement 11 qui y est logé des chocs dus aux projections de cailloux en fonctionnement. La pièce rapportée 164 protège également des contraintes et frottements qui peuvent résulter de l'accumulation de terre séchée à proximité des parties en mouvement de la roue 1. La pièce rapportée 164 forme bouclier de protection pour le moyeu.

Les figures 14A à 14D représentent partiellement un semoir 500 dans lequel des outils 1 similaires à celui des figures 1 à 12 coopèrent chacun avec un disque 501. L'outil 1 forme alors une roue de jauge. L'outil 1 est libre en rotation mais solidaire du disque 501 selon une direction sensiblement verticale. Ainsi, même en présence de dénivelés dans un champ, le disque 501 travaille à une profondeur sensiblement constante par rapport à la surface du sol. En outre, les axes respectifs de l'outil 1 et du disque 501 sont décalés l'un par rapport à l'autre. Au cours de l'avancé du semoir 500, la lèvre 55 de l'outil 1 racle contre l'une des faces du disque 501, le nettoyant ainsi de la boue et des débris qui pourraient s'y être fixés. Dans cet exemple d'application de l'outil 1, une des deux faces de l'outil 1 est inaccessible en fonctionnement : le coté de l'outil 1 correspondant à la face externe 99 du second flasque 9 est peu accessible à cause de la présence du disque 501.

Dans les exemples représentés sur les figures, la lèvre 55 du pneumatique 5 est située du côté du second flasque 9. Dans cette configuration, un espace libre important est ménagé à l'intérieur de la roue 1 du côté de la lèvre 55. L'espace libre permet notamment de loger, en partie dans l'espace intérieur défini par le pneumatique 5, un bras 502 d'un bâti de machine agricole supportant un essieu disposé sensiblement selon l'axe principal XX. Les figures 14A à 14D montrent un exemple d'un tel montage. Dans cet exemple, le bras 502 du bâti doit pouvoir s'étendre entre l'axe principal XX au voisinage du roulement 11 et la périphérie de la roue 1. Le bras 502 du bâti doit en outre ne pas gêner le fonctionnement du disque 501 disposé au contact d'une partie de la lèvre 55 et obturant en partie une face de la roue 1. Dans des variantes, la lèvre 55 peut être disposée du même côté de la roue 1 que le premier flasque 7, face au disque 501.

Comme cela apparaît sur la vue de face de la figure 14B, c'est-à-dire orientée vers l'arrière selon le sens d'avancement du semoir 500, le semoir 500 présente une configuration dite "en V". Deux disques 501 coopèrent pour creuser un sillon dans la terre. Les deux disques 501 sont le symétrique l'un de l'autre par rapport à un plan vertical s'étendant selon la direction d'avancée représentée par la flèche A. Les disques 501 ne sont pas disposés à la verticale mais au contraire orientés en partie vers le sol. Ils forment par exemple un angle d'environ 5° avec la verticale. Une roue 1 coopère avec chacun des disques 501. Les deux roues 1 présentent une orientation similaire à celle des disques 501, bien que la valeur de l'angle puisse être différente.

Comme cela apparaît sur la vue de dessus de la figure 14C, le semoir 500 présente, en outre, une configuration "en V" selon une autre orientation dans l'espace. Les deux disques 501 forment aussi un angle avec la direction d'avancée du semoir 500. L'angle vaut ici, environ 5° également. Les roues 1 présentent une orientation similaire à celle des disques 501, bien que la valeur de l'angle puisse être différente.

À cause de ces orientations particulières, les efforts subis par les roues 1 et dus à la résistance du terrain et aux frottements sont élevés. Ils sont supérieurs à ceux que subirait une roue 1 identique dont l'axe de rotation XX serait sensiblement perpendiculaire à la direction d'avancée et/ou horizontal.

Les contraintes tendent à se concentrer au niveau du moyeu et de la liaison avec l'essieu. Les améliorations apportées par l'invention présentent donc un intérêt spécifique pour les outils agricoles présentant une configuration similaire.

Un outil selon l'invention présente la résistance mécanique nécessaire pour le travail en champs tout en étant réalisé au moyen de deux flasques fabriqués avec moins de matière que les corps de roue à deux flasques existants. En différenciant les fonctions de chaque flasque, ceux-ci présentent des structures différentes l'un de l'autre. De la matière première peut être économisée, en privant le second flasque de bras et de partie centrale. Le corps de roue s'en trouve épuré et allégé. Les coûts de transport et de fabrication sont réduits.

La fabrication d'au moins un des deux flasques, celui de forme annulaire évidée en son centre, est simplifiée et plus rapide. Les coûts de fabrication s'en trouvent encore réduits.

Dans les roues à deux flasques existantes, la bonne coopération entre trois éléments est complexe à assurer. Par exemple le roulement devait non seulement être dimensionné et maintenu par rapport au premier flasque mais aussi par rapport au second flasque. Dans l'invention, le roulement ne coopère pas directement avec le second flasque. Par exemple, le roulement logé dans le moyeu peut être extrait de son logement, pour être remplacé en maintenance, sans qu'il soit nécessaire de désassembler les deux flasques et quel que soit l'état du second flasque.

Les tolérances de fabrications peuvent être augmentées.

L'invention ne se limite pas aux exemples d'outils décrits ci-avant, seulement à titre d'exemple, mais elle englobe toutes les variantes que pourra envisager l'homme de l'art dans le cadre des revendications ci-après.

## Revendications

1. Outil (1) de travail en champs du type comprenant un premier flasque (7) et un second flasque (9) qui se montent l'un sur l'autre en formant un corps de roue (3),
le premier flasque (7) comporte une partie centrale (71), une partie périphérique (73) de forme générale annulaire, et au moins un bras (75) reliant la partie centrale (71) et la partie périphérique (73) l'une à l'autre,
le second flasque (9) est homologue à la partie périphérique (73) du premier flasque (7), à l'état monté, le corps de roue (3) présente une jante (121) formée conjointement par la partie périphérique (73) du premier flasque (7) et le second flasque (9) et un moyeu formé par la partie centrale (71) du premier flasque (7).

2. Outil (1) selon la revendication 1, dans lequel le premier flasque (7) et le second flasque (9) sont faits de deux matériaux différents.

3. Outil (1) selon l'une des revendications précédentes, dans lequel le second flasque (9) est en métal.

4. Outil (1) selon l'une des revendications 1 et 2, dans lequel le premier flasque (7) est en matériau plastique et le second flasque (9) est en matériau plastique.

5. Outil (1) selon l'une des revendications précédentes, dans lequel le second flasque (9) est formé d'au moins deux pièces en forme générale de sections d'anneau.

6. Outil (1) selon l'une des revendications précédentes, dans lequel chacun du premier flasque (7) et du second flasque (9) supporte un pneumatique (5) enfilé sur la jante (121).

7. Outil (1) selon l'une des revendications précédentes, dans lequel, à l'état montés l'un sur l'autre, le moyeu du premier flasque (7) dépasse au moins en partie dans un espace intérieur défini par la forme annulaire du second flasque (9).

8. Outil (1) selon l'une des revendications précédentes, dans lequel la partie périphérique (73) du premier flasque (7) et le second flasque (9) présentent chacun une surface externe (93 ; 113) dont le diamètre au voisinage de l'interface entre le premier flasque (7) et le second flasque (9) à l'état monté est différent du diamètre du côté opposé à l'interface entre le premier flasque (7) et le second flasque (9), de sorte que la jante (121) présente un siège (201) de forme générale concave ou convexe propre à recevoir un pneumatique (5).

9. Outil (1) selon l'une des revendications précédentes, dans lequel la partie périphérique (73) du premier flasque (7) et le second flasque (9) sont mutuellement conformés de sorte que leur assemblage définisse une rainure (161) s'étendant sensiblement sur la circonférence du corps de roue (3) à l'interface de la partie périphérique (73) du premier flasque (7) et du second flasque (9), la rainure (161) étant propre à loger un talon (53) d'un pneumatique (5).

10. Outil (1) selon l'une des revendications précédentes, dans lequel le premier flasque (7) est monobloc et le second flasque (9) est monobloc.

## Patentansprüche

1. Werkzeug (1) zur Feldbearbeitung des Typs mit einem ersten Flansch (7) und einem zweiten Flansch (9), die aufeinander montiert sind, um einen Radkörper (3) zu bilden,
der erste Flansch (7) umfasst einen Mittelteil (71), einen Umfangsteil (73) mit allgemein ringförmiger Form und mindestens einen Arm (75), der den Mittelteil (71) und den Umfangsteil (73) miteinander verbindet,
der zweite Flansch (9) ist homolog zum Umfangsteil (73) des ersten Flansches (7), in montiertem Zustand hat der Radkörper (3) eine Felge (121), die durch den Umfangsteil (73) des ersten Flansches (7) und den zweiten Flansch (9) zusammen gebildet wird, und eine durch den Mittelteil (71) des ersten Flansches (7) gebildete Nabe.

2. Werkzeug (1) nach Anspruch 1, wobei der erste Flansch (7) und der zweite Flansch (9) aus zwei verschiedenen Materialien bestehen.

3. Werkzeug (1) nach einem der vorhergehenden Ansprüche, wobei der zweite Flansch (9) aus Metall besteht.

4. Werkzeug (1) nach einem der Ansprüche 1 und 2, wobei der erste Flansch (7) aus Kunststoffmaterial besteht und der zweite Flansch (9) aus Kunststoffmaterial besteht.

5. Werkzeug (1) nach einem der vorhergehenden Ansprüche, wobei der zweite Flansch (9) aus mindestens zwei Teilen in einer allgemeinen Form von Ringabschnitten gebildet ist.

6. Werkzeug (1) nach einem der vorhergehenden Ansprüche, wobei sowohl der erste Flansch (7) als auch der zweite Flansch (9) einen auf die Felge (121) gezogenen Reifen (5) trägt.

7. Werkzeug (1) nach einem der vorhergehenden Ansprüche, wobei in aufeinander montiertem Zustand die Nabe des ersten Flansches (7) mindestens teilweise in einen Innenraum hineinragt, der durch die Ringform des zweiten Flansches (9) definiert wird.

8. Werkzeug (1) nach einem der vorhergehenden Ansprüche, wobei der Umfangsteil (73) des ersten Flansches (7) und des zweiten Flansches (9) jeweils eine Außenfläche (93; 113) hat, deren Durchmesser in der Nähe der Schnittstelle zwischen dem ersten Flansch (7) und dem zweiten Flansch (9) in montiertem Zustand anders ist als der Durchmesser der Seite gegenüber der Schnittstelle zwischen dem ersten Flansch (7) und dem zweiten Flansch (9), so dass die Felge (121) einen Sitz (201) von allgemein konkaver oder konvexer Form hat, der zur Aufnahme eines Reifens (5) geeignet ist.

9. Werkzeug (1) nach einem der vorhergehenden Ansprüche, wobei der Umfangsteil (73) des ersten Flansches (7) und der zweite Flansch (9) so zueinander geformt sind, dass ihre Anordnung eine Nut (161) definiert, die sich im Wesentlichen über den Umfang des Radkörpers (3) an der Schnittstelle des Umfangsteils (73) des ersten Flansches (7) und des zweiten Flansches (9) erstreckt, wobei die Nut (161) geeignet ist, einen Wulst (53) eines Reifens (5) aufzunehmen.

10. Werkzeug (1) nach einem der vorhergehenden Ansprüche, wobei der erste Flansch (7) aus einem Stück besteht und der zweite Flansch (9) aus einem Stück besteht.

## Claims

1. Tool (1) for working in fields, of the type comprising a first flange (7) and a second flange (9) which mount one on the other, forming a wheel body (3), the first flange (7) comprises a central portion (71), a generally annular peripheral portion (73) and at least one arm (75) which connect the central portion (71) and the peripheral portion (73) to each other,
the second flange (9) is homologous to the peripheral portion (73) of the first flange (7), in the assembled state, the wheel body (3) has a rim (121) which is formed together by the peripheral portion (73) of the first flange (7) and the second flange (9) and a hub which is formed by the central portion (71) of the first flange (7).

2. Tool (1) according to claim 1, wherein the first flange (7) and the second flange (9) are made of two different materials.

3. Tool (1) according to either of the preceding claims, wherein the second flange (9) is made of metal.

4. Tool (1) according to either of claims 1 or 2, wherein the first flange (7) is made of plastics material and the second flange (9) is made of plastics material.

5. Tool (1) according to any one of the preceding claims, wherein the second flange (9) is formed by at least two components which are generally in the form of annular sections.

6. Tool (1) according to any one of the preceding claims, wherein each one of the first flange (7) and the second flange (9) supports a tyre (5) which is fitted on the rim (121) .

7. Tool (1) according to any one of the preceding claims, wherein, in the state mounted one on the other, the hub of the first flange (7) at least partially projects into an internal space which is defined by the annular form of the second flange (9).

8. Tool (1) according to any one of the preceding claims, wherein the peripheral portion (73) of the first flange (7) and the second flange (9) each have an external surface (93; 113) whose diameter in the region of the interface between the first flange (7) and the second flange (9) in the assembled state is different from the diameter at the side opposite the interface between the first flange (7) and the second flange (9), so that the rim (121) has a seat (201) which is generally concave or convex and which is capable of receiving a tyre (5).

9. Tool (1) according to any one of the preceding claims, wherein the peripheral portion (73) of the first flange (7) and the second flange (9) are mutually formed so that the assembly thereof defines a groove (161) which extends substantially over the circumference of the wheel body (3) at the interface of the peripheral portion (73) of the first flange (7) and the second flange (9), the groove (161) being capable of receiving a bead (53) of a tyre (5).

10. Tool (1) according to any one of the preceding claims, wherein the first flange (7) is monobloc and the second flange (9) is monobloc.
